# EUROPÄISCHE PATENTSCHRIFT

(11) **EP 2 460 397 B1**
(45) Veröffentlichungstag und Bekanntmachung des Hinweises auf die Patenterteilung: **20.02.2019**
(21) Anmeldenummer: 11009495.0
(22) Anmeldetag: 01.12.2011
(51) Int. Cl.: B60D 1/28, B60D 1/04, A01B 59/00, B60D 1/14

(54) **Kupplungshaken für einen Unterlenker eines Ackerschleppers**
Coupling hook for a lower link of a farm tractor
Crochet d'accouplement pour une barre inférieure d'un tracteur agricole

(30) Priorität: 02.12.2010 DE 202010016051 U
(43) Veröffentlichungstag der Anmeldung: 06.06.2012
(73) Patentinhaber: JRS GmbH & Co. KG, 85119 Ernsgaden (DE)
(72) Erfinder: Sauermann, Hans, 85119 Ernsgaden (DE)
(74) Vertreter: Witzany, Manfred

(56) Entgegenhaltungen:
- EP-A1- 1 990 220
- WO-A1-2005/089528
- JP-A- 56 135 306
- US-A1- 2001 037 759

## Beschreibung

Die Erfindung betrifft einen Kupplungshaken für einen Unterlenker eines Ackerschleppers gemäß dem Oberbegriff des Patentanspruchs 1.

Aus der DE 24 56 971 B1 ist ein Kupplungshaken bekannt. Dieser Kupplungshaken weist einen Hakenkörper und eine Aufnahmekammer auf, in der ein Sperrriegel gehalten ist. Dieser Sperrriegel ist zwischen einer einen kugelförmigen Kupplungskörper übergreifenden Sperrstellung und einer in die Aufnahmekammer zurückgezogenen Lösestellung verstellbar gehalten. Hierzu ist in der Aufnahmekammer ein Verriegelungshebel vorgesehen, der mit dem Sperrriegel einen Kniehebel bildet. Dieser Kniehebel ist dabei derart ausgebildet, dass beim Eindrücken des Kupplungskörpers in die Aufnahme des Kupplungshakens der Sperrriegel in seine Verriegelungsstellung überführt
wird. Damit ist ein automatisches Ankuppeln des Kupplungskörpers gewährleistet. In der Praxis hat sich herausgestellt, dass der eingangs geschilderte, gattungsgemäße Kupplungshaken keine hinreichende Betriebssicherheit besitzt. Es kommt immer wieder vor, dass ein ordnungsgemäß angekuppeltes Gerät wie beispielsweise ein Pflug bei der Fahrt in unwegsamem Gelände verloren geht. Diese Ereignisse sind zwar glücklicherweise selten, führen jedoch zu beträchtlichen Beschädigungen am angekuppelten Gerät. Nicht zuletzt stellt diese geringe Unzuverlässigkeit des Kupplungssystems auch ein erhebliches Unfallrisiko dar. Dabei ist zu berücksichtigen, dass Ackerschlepper auch im öffentlichen Straßenverkehr eingesetzt werden. Verliert ein Ackerschlepper sein Anbaugerät im öffentlichen Straßenverkehr, so stellt dies für den nachfolgenden Verkehr eine extreme Gefährdung bis hin zu möglichen Todesfolgen dar.

Aus der EP 1 990 220 B1 ist ein gattungsgemäßer Kupplungshaken bekannt, der ein Kupplungsglied aufnehmen kann. Dieser Kupplungshaken weist eine Aufnahmekammer auf, in der ein Sperrriegel schwenkbar gelagert ist, der mit einem linear verstellbaren Sperrhebel zusammenwirkt. Der Sperrriegel kann in einer Sperrstellung in das Kupplungsglied übergreifen und dadurch sperren. Der Sperrriegel weist dabei eine Sperrfläche auf, die mit einer entsprechenden Sperrfläche des Sperrhebels zusammenwirkt und diesen in der Kuppelstellung verriegelt. Durch Verschieben des Sperrriegels nach oben lässt sich diese Verriegelung lösen, so dass der Sperrriegel frei verschwenkbar wird und das Kupplungsglied aus dem Kupplungshaken entfernt werden kann. Zum Ankuppeln des Kupplungsglieds verschwenkt dieses den Sperrriegel so weit, dass eine Nocke des Sperrriegels gegen den Sperrhebel drückt. Auf diese Weise wird der Sperrhebel nach oben verstellt, so dass die Sperrwirkung auf den Sperrriegel aufgehoben ist. Ab einer bestimmten Schwenklage des Sperrriegels gerät die Nocke außer Eingriff mit dem Sperrhebel, so dass dieser durch Kraftwirkung einer Feder in seine Sperrstellung gezogen wird. Dieser Kupplungshaken bildet den Ausgangspunkt der vorliegenden Erfindung.

Der Erfindung liegt die Aufgabe zugrunde, einen Kupplungshaken der eingangs genannten Art zu schaffen, der sich durch eine erhöhte Betriebssicherheit ohne Aufgabe der automatischen Ankupplungsfunktion auszeichnet.

Diese Aufgabe wird mit den Merkmalen des Patentanspruchs 1 gelöst.

Ein Kupplungshaken gemäß Anspruch 1 bildet vorzugsweise das freie Ende eines Unterlenkers eines Ackerschleppers.

Dieser Kupplungshaken weist einen Hakenkörper auf, in dem mindestens eine Aufnahme für einen Kupplungskörper vorgesehen ist. Dieser Kupplungskörper ist vorzugsweise teilkugelförmig ausgebildet und ist Teil eines Anbaugerätes, das mit dem Ackerschlepper zu verbinden ist. Dieses Anbaugerät wird dabei vorzugsweise über eine Dreipunktaufhängung, bestehend aus zwei Unterlenkern und einem Oberlenker, mit dem Ackerschlepper verbunden. Der Hakenkörper weist außerdem eine Aufnahmekammer auf, in der mindestens ein Sperrriegel gehalten ist. Die Unterbringung des Sperrriegels in einer Aufnahmekammer hat dabei den Vorteil, dass der gesamte Mechanismus zum Sperren und Lösen des Kupplungskörpers Platz sparend untergebracht ist. Außerdem wird dieser Mechanismus auf diese Weise zuverlässig vor eindringendem Schmutz bewahrt. Der Sperrriegel ist dabei zwischen einer den Kupplungskörper übergreifenden und verriegelnden Sperrstellung und einer so weit in die Aufnahmekammer zurückgezogenen Freigabestellung verstellbar, dass der Kupplungskörper aus der Aufnahme entnehmbar ist. Damit sorgt der Sperrriegel für die notwendige Sicherheit, die den Kupplungskörper in der Aufnahme des Hakenkörpers hält. Um ein automatisches Ankuppeln zu ermöglichen, kann der Kupplungskörper beim Eindringen in die Aufnahme des Hakenkörpers den Sperrriegel in eine Aktivierungsstellung verstellen, so dass der Sperrriegel anschließend selbsttätig in die Sperrstellung überführt wird. In der Praxis wird dies am einfachsten dadurch erreicht, dass der Sperrriegel den Kupplungskörper in der Freigabestellung noch geringfügig übergreift, wobei er federnd gegen den Kupplungskörper gedrückt ist. Der Kupplungskörper kann dann den Sperrriegel weiter zurück drücken, so dass eine Arretierung des Sperrriegels in der Freigabestellung gelöst wird und der Sperrriegel durch Federkraft anschließend in dessen Sperrstellung überführt wird.

Damit hat der Sperrriegel jedoch eine Bewegungsfreiheit in Richtung der Freigabestellung. Insbesondere beim Fahren des Ackerschleppers auf unwegsamem Gelände kann es dazu kommen, dass der Kupplungskörper Drehbewegungen um seine Querachse ausführt. Diese Drehbewegungen können zu Drehmomentübertragungen auf den Sperrriegel führen, so dass dieser ungewollt in die Freigabestellung überführt wird. Zur Lösung dieses Problems ist vorgesehen, dass der Sperrriegel einer vom gekuppelten Kupplungskörper ausgehenden Kraft auf den Sperrriegel widersteht. Der Sperrriegel wird demnach in dessen Sperrstellung verriegelt. Diese Maßnahme allein hätte jedoch zur Konsequenz, dass der gewünschte automatische Ankuppelvorgang nicht mehr möglich wäre. Versucht man den Kupplungskörper am Sperrriegel vorbei in die Aufnahme zu drücken, so würde der in der Sperrstellung befindliche Sperrriegel den Weg des Kupplungskörpers versperren. Um die gewünschte automatische Ankuppelmöglichkeit zu bewahren, muss der Sperrriegel trotz seiner Arretierung in der Sperrstellung in die Freigabestellung überführt werden können. Diese widersprüchlichen Forderungen werden durch eine differenzierte Arretierung des Sperrriegels in Einklang gebracht. Dabei ist vorgesehen, dass der Sperrriegel durch eine zur Aufnahme des Hakenkörpers gerichtete Kraft in die Freigabestellung überführt werden kann. Dies führt dazu, dass der Kupplungskörper, der sich außerhalb der Aufnahme befindet, den Sperrriegel in die Freigabestellung drücken kann, während er in seiner gekuppelten Position in der Aufnahme keinerlei Bewegung auf den Sperrriegel übertragen kann. Um diese differenzierte Arretierung des Sperrriegels zu realisieren, wirkt der Sperrriegel mit mindestens einer Nocke des mindestens einen verstellbaren Sperrhebels zusammen. Damit kann durch die Position des Sperrhebels und damit der Nocke die Bewegungsfreiheit des Sperrriegels differenziert eingestellt werden. Um zusätzlich ein gewolltes Entkoppeln des Kupplungskörpers aus der Aufnahme zu ermöglichen, kann der Sperrriegel auch durch Verstellung des Sperrhebels in die Freigabestellung überführt werden. Zur Erzielung aller genannten Funktionen sind - abgesehen von Federn zur Vorspannungserzeugung - nur zwei bewegliche Teile und ein feststehendes Hakengehäuse erforderlich. Damit ergibt sich ein einfacher und folglich kostengünstiger und zuverlässiger Mechanismus.

Zur Erzielung der gewünschten differenzierten Sperrwirkung des Sperrriegels ist der Sperrriegel begrenzt in Richtung zur Aufnahme verstellbar. Dabei ist vorgesehen, dass der Sperrriegel in einer zur Aufnahme verstellten Ankuppellage in die Freigabestellung drückbar ist. In nicht verstellter Arretierlage ist dagegen der Sperrriegel in der Sperrstellung arretiert. Auf diese Weise kann sehr einfach zwischen einer zur Aufnahme des Hakenkörpers gerichteten Kraft und einer entsprechenden Gegenkraft unterschieden werden. Beim Ankuppelvorgang drückt der Kupplungskörper den Sperrriegel geringfügig in Richtung zur Aufnahme und überführt ihn dadurch in die Ankuppelstellung. Befindet sich dagegen der Kupplungskörper in der Aufnahme, so ist eine Verstellung des Sperrriegels in die Ankuppelstellung gar nicht möglich, da der Kupplungskörper den Sperrriegel entgegen der Aufnahme drückt. Auf diese Weise ist die gewünschte Differenzierung in der Bewegungsfreiheit des Sperrriegels gegeben, ohne die Sicherheit der Kupplung in irgendeiner Weise zu beeinträchtigen.

Zur Erzielung einer einfachen automatischen Ankuppelbarkeit ist es gemäß Anspruch 2 günstig, wenn der Sperrriegel in Richtung der Sperrstellung federnd vorgespannt ist. Zur Erhöhung der Sicherheit der Kupplung ist es außerdem zweckmäßig, wenn der Sperrhebel in Richtung der Sperrstellung, in der der Sperrriegel arretiert ist, federnd vorgespannt ist.

Zur Realisierung eines einfachen Aufbaus des Kupplungshakens, ist es gemäß Anspruch 3 günstig, wenn der Sperrriegel mindestens eine Kulisse oder Führungsfläche aufweist, an der die Nocke des Sperrhebels angreift. Mit einer Kulisse oder Führungsfläche kann die gewünschte Funktion des Sperrriegels und Sperrhebels sehr feinfühlig abgestimmt werden, so dass der gesamte Mechanismus sehr kompakt realisiert werden kann.

Zur Realisierung einer ausreichenden Arretierung des Sperrriegels in dessen Sperr- bzw. Freigabestellung ist es gemäß Anspruch 4 vorteilhaft, wenn die Kulisse oder Führungsfläche mindestens eine Rastausnehmung aufweist.

In diese Rastausnehmung greift die Nocke des Sperrhebels ein.

Die Rastausnehmung für die Sperrstellung des Sperrriegels ist gemäß Anspruch 5 derart geformt, dass die Nocke durch Verstellung des Sperrriegels in Richtung zur Aufnahme aus der Rastausnehmung treten kann. Damit ist gewährleistet, dass der Sperrriegel bei Verstellung in Richtung zur Aufnahme frei schwenkbar ist, während er in seiner Sperrstellung im Übrigen arretiert ist.

Um den Entkuppelvorgang auch ferngesteuert vom Sitz des Ackerschleppers aus durchführen zu können, ist es gemäß Anspruch 8 vorteilhaft, wenn am Sperrhebel mindestens ein Hubzylinder, Bowdenzug oder Seil angreift. Mit diesem Bowdenzug oder Seil kann dann der Sperrriegel ferngesteuert in dessen Freigabestellung überführt werden. Dies ist insbesondere deshalb einfach möglich, weil das freie Ende des Sperrhebels zur Überführung in die Freigabestellung eine horizontale, zum Ackerschlepper gerichtete Bewegung ausführen kann. Das Seil bzw. der Bowdenzug kann auch über eine oder mehrere Umlenkungen, insbesondere Rollen umgelenkt werden. Der Hubzylinder kann hydraulisch, pneumatisch, oder elektrisch betätigt sein und gestattet ebenfalls eine Fernbedienung der Endkupplung.

Um jede Übertragung von Drehmomenten vom Kupplungskörper auf den Sperrriegel zu verhindern, ist es gemäß Anspruch 9 möglich, am Sperrriegel mindestens eine den Kupplungskörper erfassende Rolle vorzusehen. Bei einer Drehung des Kupplungskörpers wird die Rolle um ihre Achse gedreht, so dass der gesamte Sperrriegel in seiner Position bleibt. Auch hierdurch wird ein unerwünschtes Überführen des Sperrriegels in die Freigabestellung verhindert. Durch eine Kombination mit der oben beschriebenen Nockensteuerung gemäß Anspruch 1 wird erreicht, dass Kräfte vom Sperrmechanismus des Sperrriegels ferngehalten werden, so dass der Kupplungshaken sehr zuverlässig arbeitet.

Gemäß Anspruch 10 ist es günstig, wenn die mindestens eine Rolle erst nach einer Schwenkbewegung des Sperrriegels nach oben in Eingriff mit dem Kupplungskörper steht. Hierdurch wird die Lagerung der Rolle geschont, so dass sie nur dann beansprucht wird, wenn sie auch tatsächlich zur Verhinderung an einer Übertragung von Drehmomenten vom Kupplungskörper auf den Sperrriegel benötigt wird.

Schließlich ist es gemäß Anspruch 11 vorteilhaft, wenn der Sperrriegel von mindestens einem Sensor überwacht ist. Dieser Sensor ist vorzugsweise mit einem Signalgeber im Ackerschlepper verbunden, der ein Warnsignal abgibt, wenn der Kupplungshaken nicht ordnungsgemäß verriegelt ist. Das Warnsignal kann optisch und/oder akustisch abgegeben werden, indem der Signalgeber als Kontrollleuchte und/oder Lautsprecher ausgebildet ist. Auf diese Weise wird verhindert, dass der Ackerschlepper bei unzureichend verriegeltem Kupplungshaken bewegt wird.

Der Erfindungsgegenstand wird beispielhaft anhand der Zeichnung erläutert, ohne den Schutzumfang zu beschränken.

Es zeigt:
- Figur 1: eine Schnittdarstellung durch eine erste Ausführungsform eines Kupplungshakens in der Sperrstellung,
- Figur 2: den Kupplungshaken gemäß Figur 1 in der Freigabestellung,
- Figur 3: den Kupplungshaken gemäß Figur 1 in der Aktivierungsstellung,
- Figur 4: den Kupplungshaken gemäß Figur 1 in der Verschlussstellung,
- Figur 5: eine Schnittdarstellung durch eine zweite Ausführungsform eines Kupplungshakens in der Sperrstellung,
- Figur 6: den Kupplungshaken gemäß Figur 5 in der Freigabestellung,
- Figur 7: den Kupplungshaken gemäß Figur 5 in der Aktivierungsstellung und
- Figur 8: den Kupplungshaken gemäß Figur 5 in der Verschlussstellung.

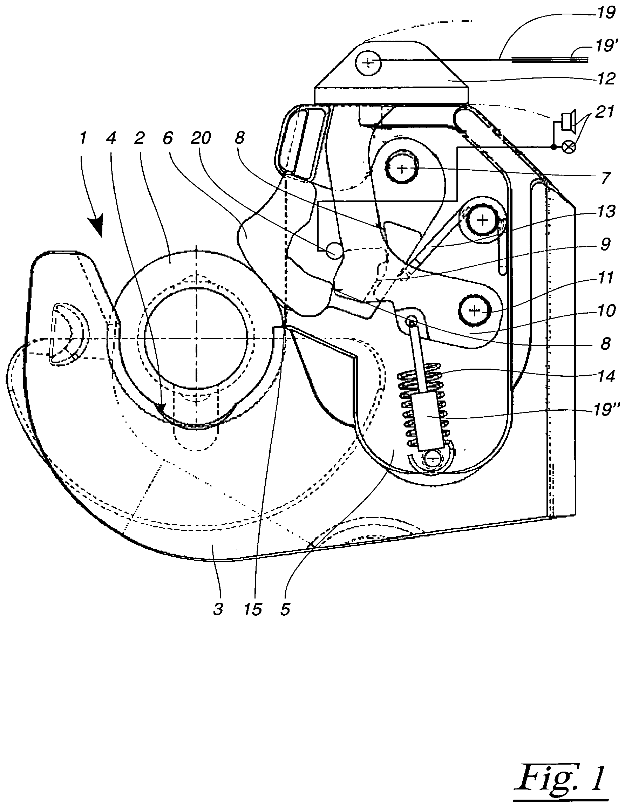

Die Figur 1 zeigt eine Schnittdarstellung eines Kupplungshakens für einen Unterlenker eines Ackerschleppers mit einem eingelegten Kupplungskörper 2. Der Kupplungskörper 2 ist im Wesentlichen teilkugelförmig ausgebildet. Er ist das Kupplungsglied eines mit dem Ackerschlepper zu verbindenden Anbaugerätes wie beispielsweise eines Pfluges. Der Kupplungshaken 1 besitzt einen Hakenkörper 3 mit einer Aufnahme 4, in der der Kupplungskörper 2 aufgenommen ist.

Der Kupplungshaken 1 besitzt außerdem eine Aufnahmekammer 5, in der ein Sperrriegel 6 gehalten ist. Der Sperrriegel 6 ist um eine Achse 7 schwenkbar gelagert und geringfügig in vertikaler Richtung relativ zur Achse 7 verschiebbar. Der Sperrriegel 6 übergreift dabei in der in Figur 1 dargestellten Sperrstellung den Kupplungskörper 2, so dass dieser nicht versehentlich die Aufnahme 4 des Kupplungshakens 1 verlassen kann.

Der Sperrriegel 6 weist Führungsflächen 8 auf, die mit einer Nocke 9 eines Sperrhebels 10 zusammenwirken. Der Sperrhebel 10 ist um eine weitere Achse 11 verschwenkbar gelagert und mittels einer Handhabe 12 von außen zugänglich. Zusätzlich ist daran gedacht, im oberen Endbereich des Sperrhebels 10 ein Seil oder einen Bowdenzug zu halten, um den Sperrhebel 10 auch ferngesteuert verschwenken zu können.

Der Sperrriegel 6 steht mit einer Drehfeder 13 in Wirkverbindung, die den Sperrriegel 6 in die dargestellte Sperrstellung drückt. Der Sperrhebel 10 ist von einer Zugfeder 14 belastet, die ihn ebenfalls in die dargestellte Sperrstellung vorspannt.

In der dargestellten Sperrstellung drückt die Nocke 9 gegen die Führungsfläche 8, so dass der Sperrriegel 6 in seiner Sperrstellung arretiert ist. Falls der Kupplungskörper 2 Drehbewegungen ausführt, können keinerlei Drehmomente auf den Sperrriegel 6 übertragen werden, um diesen aus seiner Sperrstellung zu verschwenken. Damit ist es dem Kupplungskörper 2 nicht mehr möglich, die Aufnahme 4 des Kupplungshakens 1 unbeabsichtigt zu verlassen.

Zusätzlich ist am Sperrriegel 6 eine drehbare Rolle 15 abgestützt, die mit dem Kupplungskörper 2 in Wirkverbindung steht. Dies erhöht zusätzlich die Sicherheit, da Drehmomente, die vom Kupplungskörper 2 ausgehen, zu einer Drehbewegung der Rolle 15 führen und folglich den Sperrriegel 6 nicht verstellen können. Derartige Drehmomente werden daher nicht in die Schwenklagerung des Sperrriegels 6 eingebracht. Falls die freie Drehbarkeit der Rolle 15 beispielsweise durch Einlagerung von Schmutz beeinträchtigt sein sollte, werden mögliche Drehmomente, die auf den Sperrriegel 6 einwirken, von der Nocke 9 abgestützt.

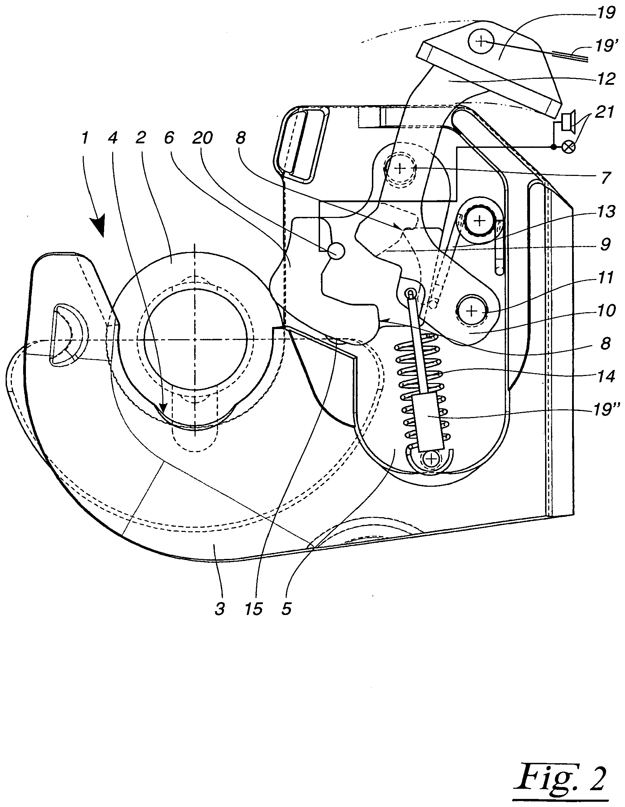

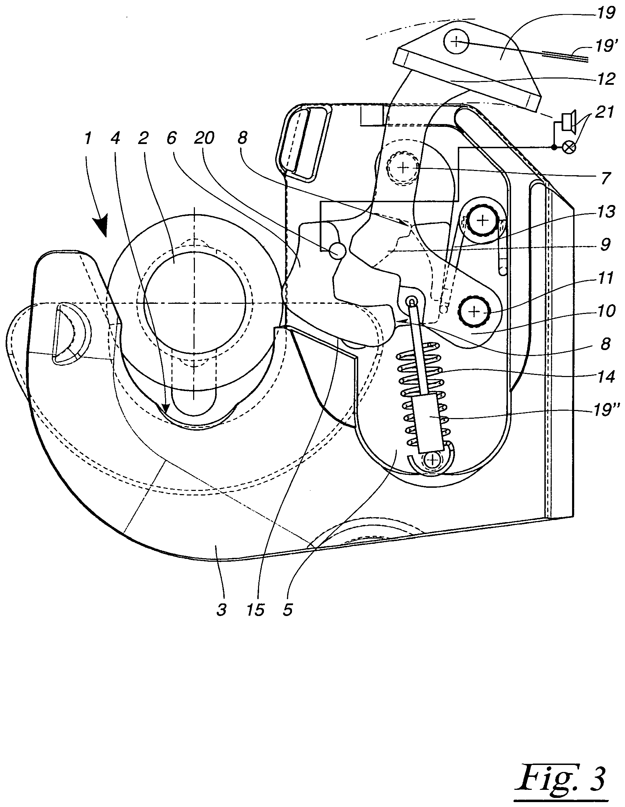

Ein Bereich des Kupplungshakens 1 unterhalb der Handhabe 12 in der dargestellten Sperrstellung ist mit einer auffälligen Farbe, vorzugsweise einer Signalfarbe wie Rot ausgebildet. Diese farbig ausgestaltete Stelle des Kupplungshakens 1 wird damit in der dargestellten Sperrstellung verdeckt. Befindet sich die Handhabe 12 dagegen nicht in ihrer Sperrstellung, sondern in einer in den Figuren 2 und 3 dargestellten abweichenden Stellung, so ist dieser farbig gekennzeichnete Bereich zu sehen und warnt den Benutzer, dass der Kupplungshaken 1 nicht ordnungsgemäß verriegelt ist. Dies erhöht die Sicherheit des Kupplungshakens 1.

Alternativ oder zusätzlich befindet sich im Kupplungshaken 1 ein Sensor 20, der die Lage der Handhabe 12 erfasst. In der in Figur 1 dargestellten Sperrstellung liefert der Sensor 20 ein inaktives Signal, so dass ein damit verbundener akustischer oder optischer Signalgeber 21 inaktiv ist. Weicht dagegen die Lage der Handhabe 12 von der dargestellten Lage ab, so werden der akustische und/oder optische Signalgeber 21 aktiv.

Am Sperrhebel 10 kann ein Seil 19 oder Bowdenzug 19' angreifen, um eine fernbetätigte Bewegung des Sperrhebels 10 zu ermöglichen. Das Seil 19 oder der Bowdenzug 19' sind dabei vorzugsweise bis in die Nähe des Fahrersitzes des Ackerschleppers geführt. Alternativ kann der Sperrhebel 10 auch von einem Hubzylinder 19" betätigt werden. Dieser Hubzylinder 19" kann als hydraulischer, pneumatischer oder elektrischer Hubzylinder 19"ausgebildet sein. Auch auf diese Weise ist eine Fernbetätigung der Handhabe 12 möglich.

Die Figur 2 zeigt den Kupplungshaken gemäß Figur 1 in der Freigabestellung. Dabei ist der Sperrhebel 10 im Uhrzeigersinn verschwenkt, so dass die Nocke 9 außer Eingriff mit der Führungsfläche 8 gerät. Beim Verschwenken des Sperrhebels 10 wird der Sperrriegel 6 durch Zusammenwirken der Nocke 9 mit der Führungsfläche 8 verschwenkt, so dass sich der Sperrhebel 6 weitgehend in die Aufnahmekammer 5 zurückzieht. Der Sperrriegel 6 übergreift aber dennoch den Kupplungskörper 2 geringfügig, was für die weitere Funktion des Kupplungshakens 1 von Bedeutung ist. Der Sperrriegel 6 und der Sperrhebel 10 arretieren sich in dieser Freigabestellung derart, dass zwar der Sperrriegel 6 frei in die Aufnahmekammer 5 schwenkbar ist, der Sperrhebel 10 jedoch in der dargestellten Freigabestellung verbleibt.

Die Figur 3 zeigt den Kupplungshaken gemäß Figur 1 in seiner Aktivierungsstellung. Diese wird erreicht, indem der Kupplungskörper 2 von oben gegen die Aufnahme 4 gedrückt wird. Dabei wird der Sperrriegel 6 nach unten verstellt und gleichzeitig in die Aufnahmekammer 5 verschwenkt. Aufgrund des Übergriffs des Sperrriegels 6 über die Aufnahme 4 ist dies nicht nur in der Sperrstellung, sondern auch in der Freigabestellung des Sperrriegels 6 möglich. Hierdurch löst sich die Arretierung des Sperrhebels 10, da die Nocke 9 außer Eingriff mit der Führungsfläche 8 gerät. Damit ist der Sperrhebel 10 frei schwenkbar und wird aufgrund der Feder 14 in Richtung seiner Sperrstellung verschwenkt.

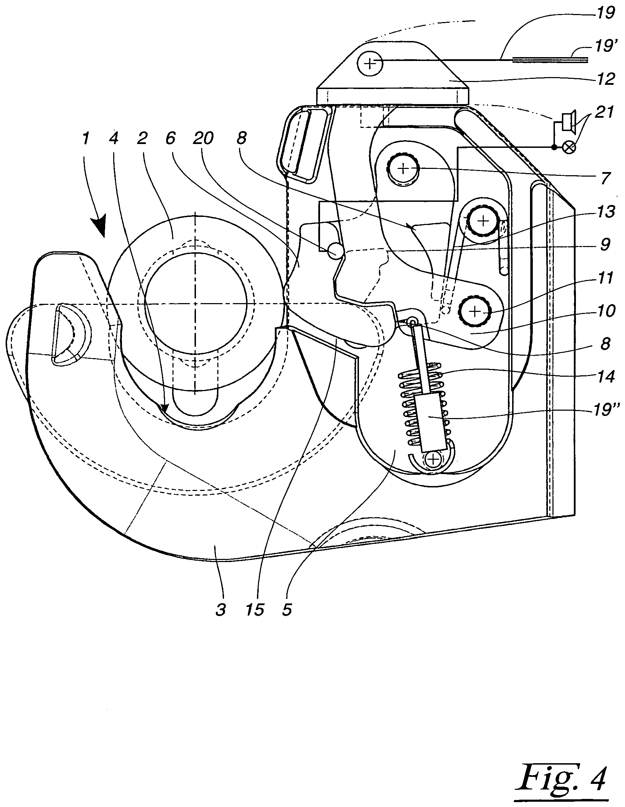

Die Figur 4 zeigt die Verschlusslage des Kupplungshakens 1. Diese stellt sich ein, wenn der Sperrhebel 10 seine Sperrstellung erreicht hat. Der Sperrriegel 6 befindet sich jedoch noch in seiner Aktivierungsstellung gemäß Figur 3. Durch weiteres Eindrücken des Kupplungskörpers 2 gegen die Aufnahme 4 wird der Sperrriegel 6 frei verschwenkbar und wird durch die Wirkung der Drehfeder 13 in seine Sperrstellung gemäß Figur 1 verschwenkt. In dieser Lage wird der Sperrriegel 6 wieder durch das Zusammenwirken zwischen der Nocke 9 und der Sperrfläche 8 arretiert, so dass der Kupplungskörper 2 sicher in der Aufnahme 4 des Kupplungshakens 1 gehalten ist.

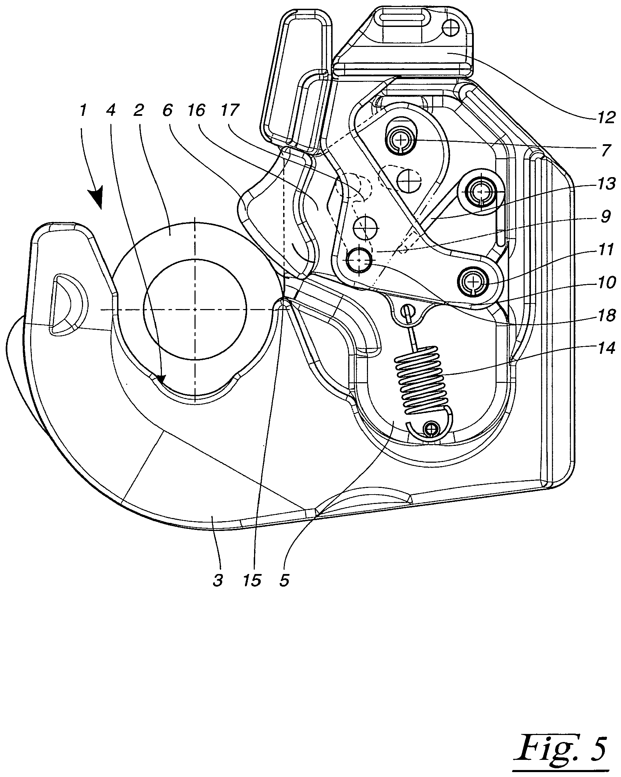

Die Figur 5 zeigt eine alternative Ausführungsform des Kupplungshakens 1 gemäß Figur 1, wobei gleiche Bezugszeichen gleiche Teile benennen. Im Folgenden wird nur auf die Unterschiede zur Ausführungsform gemäß Figur 1 eingegangen.

Bei dieser Ausführungsform sind die Führungsflächen 8 zu einer Art Kulisse 16 abgewandelt. In diese Kulisse 16 greift die Nocke 9 des Sperrhebels 10 ein. Um den Sperrriegel 6 in der dargestellten Sperrstellung zu verriegeln, weist die Kulisse 16 in diesem Bereich eine Rastausnehmung 17 auf.

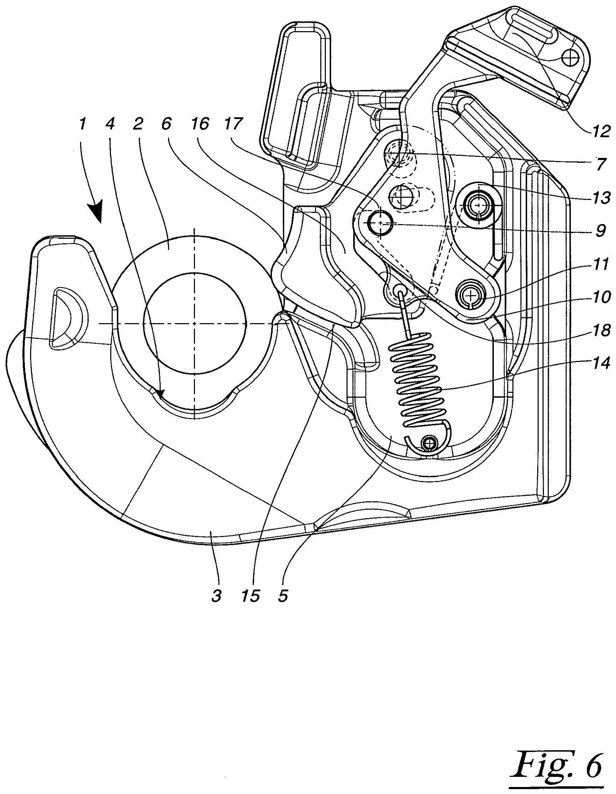

Durch Verschwenken des Sperrhebels 10 in Richtung in seiner Freigabestellung gemäß Figur 6 taucht die Nocke 9 in eine weitere Rastausnehmung 18 der Kulisse 16 ein. Diese weitere Rastausnehmung 18 sorgt für eine Arretierung des Sperrhebels 10 in seiner Freigabestellung.

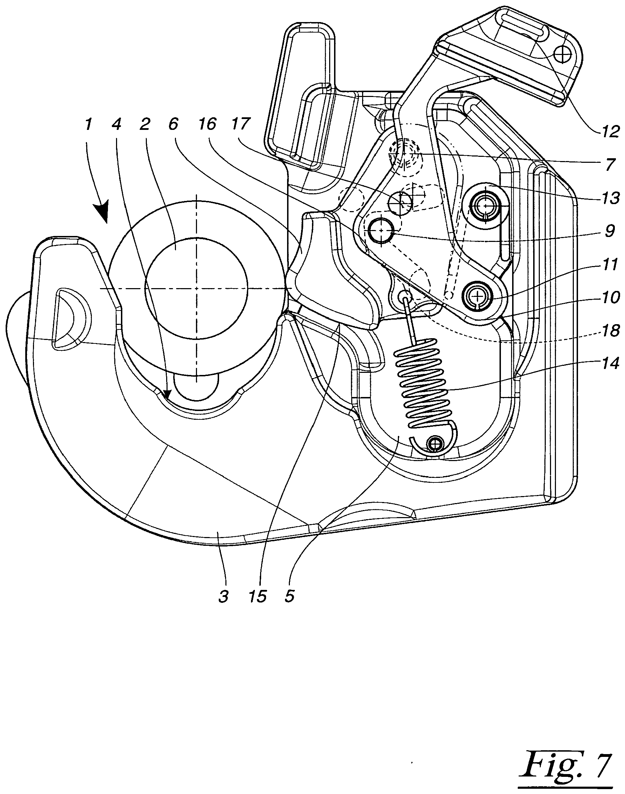

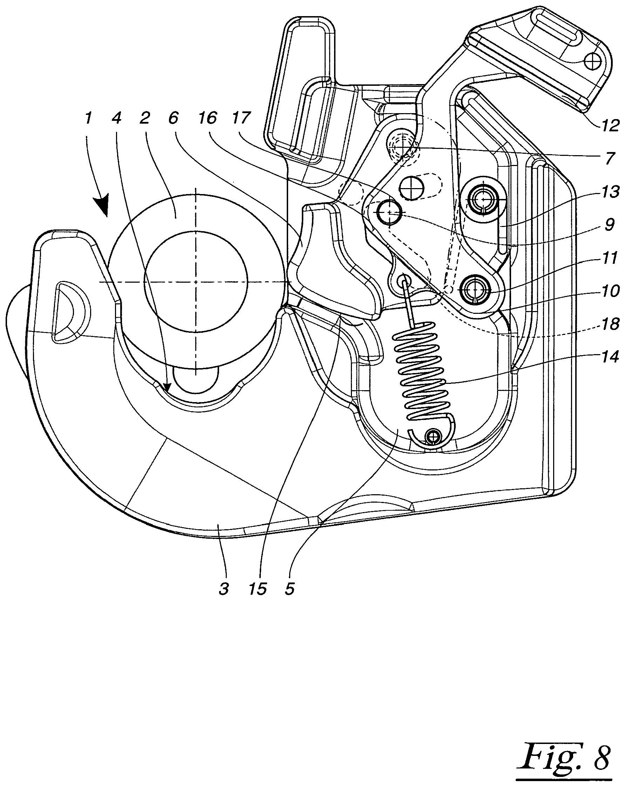

In der Aktivierungsstellung gemäß Figur 7 ist der Sperrhebel 10 frei schwenkbar und wird von der Zugfeder 14 in die in Figur 8 dargestellte Verschlussstellung bewegt.

### Bezugszeichenliste

- 1: Kupplungshaken
- 2: Kupplungskörper
- 3: Hakenkörper
- 4: Aufnahme
- 5: Aufnahmekammer
- 6: Sperrriegel
- 7: Achse
- 8: Führungsfläche
- 9: Nocke
- 10: Sperrhebel
- 11: Achse
- 12: Handhabe
- 13: Drehfeder
- 14: Zugfeder
- 15: Rolle
- 16: Kulisse
- 17: Rastausnehmung
- 18: Rastausnehmung
- 19: Seil
- 19': Bowdenzug
- 19": Hubzylinder
- 20: Sensor
- 21: Signalgeber

## Patentansprüche

1. Kupplungshaken für einen Unterlenker eines Ackerschleppers, wobei der Kupplungshaken (1) einen Hakenkörper (3) mit mindestens einer Aufnahme (4) für einen Kupplungskörper (2) und mindestens eine Aufnahmekammer (5) aufweist, in der mindestens ein Sperrriegel (6) gehalten ist, der zwischen einer den Kupplungskörper (2) übergreifenden und verriegelnden Sperrstellung und einer so weit in die Aufnahmekammer (5) zurückgezogenen Freigabestellung verschwenkbar ist, dass der Kupplungskörper (2) aus der Aufnahme (4) entnehmbar ist, wobei der Kupplungskörper (2) den Sperrriegel (6) beim Eindrücken in die Aufnahme (4) in eine Aktivierungsstellung verstellen kann, so dass der Sperrriegel (6) anschließend selbsttätig in die Sperrstellung überführt wird, dass der Sperrriegel (6) mit mindestens einer Nocke (9) mindestens eines verstellbaren Sperrhebels (10) in Wirkverbindung steht, die den Sperrriegel (6) in dessen Verriegelungsstellung arretiert, so dass er einer vom gekuppelten Kupplungskörper (2) ausgehenden, auf den Sperrriegel (6) wirkenden Kraft widersteht und einerseits durch eine zur Aufnahme (4) gerichteten Kraft und andererseits durch Verstellung des Sperrhebels (10) in die Freigabestellung überführt werden kann, **dadurch gekennzeichnet, dass** der Sperrriegel (6) begrenzt in Richtung zur Aufnahme (4) verschiebbar ist, wobei der Sperrriegel (6) in der zur Aufnahme (4) verstellten Aktivierungsstellung in die Freigabestellung drückbar ist.

2. Kupplungshaken nach Anspruch 1, **dadurch gekennzeichnet, dass** der Sperrhebel (10) und/oder Sperrriegel (6) in Richtung der Sperrstellung federnd vorgespannt ist.

3. Kupplungshaken nach Anspruch 1 oder 2, **dadurch gekennzeichnet, dass** der Sperrriegel (6) mindestens eine Kulisse (16) oder mindestens eine Führungsfläche (8) aufweist, an der die Nocke (9) des Sperrhebels (10) angreift.

4. Kupplungshaken nach Anspruch 3, **dadurch gekennzeichnet, dass** in der Kulisse (16) oder Führungsfläche (8) mindestens eine Rastausnehmung (17, 18) vorgesehen ist, in der die Nocke (9) des Sperrhebels (10) in der Sperr- und/oder Freigabestellung eingreift.

5. Kupplungshaken nach Anspruch 4, **dadurch gekennzeichnet,** das die Rastausnehmung (17, 18) für die Sperrstellung derart geformt ist, dass die Nocke (9) durch Verstellung des Sperrriegels (6) in Richtung zur Aufnahme (4) aus der Rastausnehmung (17, 18) treten kann.

6. Kupplungshaken nach Anspruch 3, **dadurch gekennzeichnet, dass** die Kulisse (16) oder Führungsfläche (8) mindestens eine Anschlagfläche aufweist, welche in etwa quer zur Bewegungsrichtung des Sperrriegels (6) zwischen der Sperr- und Freigabestellung ausgerichtet ist, wobei die Nocke (9) in der Sperr- und/oder Freigabestellung an der Anschlagfläche anliegt.

7. Kupplungshaken nach Anspruch 6, **dadurch gekennzeichnet,** das die Anschlagfläche für die Sperrstellung derart geformt ist, dass die Nocke (9) durch Verstellung des Sperrriegels (6) in Richtung zur Aufnahme (4) außer Eingriff mit der Anschlagfläche gerät.

8. Kupplungshaken nach mindestens einem der Ansprüche 1 bis 7, **dadurch gekennzeichnet, dass** am Sperrhebel (10) mindestens ein Hubzylinder (19"), Bowdenzug (19') oder Seil (19) angreift, durch den/das der Sperrhebel (10) in die Freigabestellung überführt werden kann.

9. Kupplungshaken nach mindestens einem der Ansprüche 1 bis 8 **dadurch gekennzeichnet, dass** am Sperrriegel (6) mindestens eine den Kupplungskörper (2) erfassende, um eine Achse drehbare Rolle (15) vorgesehen ist, die eine Übertragung von Drehmomenten des Kupplungskörpers (2) auf den Sperrriegel (6) verhindert.

10. Kupplungshaken nach Anspruch 9, **dadurch gekennzeichnet, dass** die mindestens eine Rolle (15) erst nach einer Schwenkbewegung des Sperrriegels (6) nach oben in Eingriff mit dem Kupplungskörper (2) steht.

11. Kupplungshaken nach mindestens einem der Ansprüche 1 bis 10, **dadurch gekennzeichnet, dass** der Sperrriegel (6) von mindestens einem Sensor (20) überwacht ist, der zumindest erkennen kann, ob sich der Sperrriegel (6) in seiner Sperrstellung befindet.

## Claims

1. Coupling hook for a lower link of an agricultural tractor, wherein the coupling hook (1) has a hook body (3) with at least one receptacle (4) for a coupling body (2), and at least one receiving chamber (5), in which at least one safety catch (6) is held, which safety catch can be pivoted between a locking blocking position engaging over the coupling body (2) and a release position which is pulled back into the receiving chamber (5) to an extent such that the coupling body (2) can be removed from the receptacle (4), wherein the coupling body (2), as it presses into the receptacle (4), can adjust the safety catch (6) into an activation position such that the safety catch (6) is subsequently automatically transferred into the blocking position, that the safety catch (6) is operatively connected to at least one cam (9) of at least one adjustable blocking lever (10), said cam retaining the safety catch (6) in the blocking position thereof, and therefore said safety catch withstands a force originating from the coupled coupling body (2) and acting on the safety catch (6), and can be transferred into the release position firstly by a force directed towards the receptacle (4) and secondly by adjustment of the blocking lever (10), **characterized in that** the safety catch (6) can be displaced to a limited extent in the direction of the receptacle (4), the safety catch (6), in the activation position adjusted with respect to the receptacle (4), being pressable into the release position.

2. Coupling hook according to Claim 1, **characterized in that** the blocking lever (10) and/or the safety catch (6) are/is prestressed resiliently in the direction of the blocking position.

3. Coupling hook according to Claim 1 or 2, **characterized in that** the safety catch (6) has at least one slotted guide (16) or at least one guide surface (8) on which the cam (9) of the blocking lever (10) acts.

4. Coupling hook according to Claim 3, **characterized in that** the slotted guide (16) or guide surface (8) is provided with at least one latching recess (17, 18) in which the cam (9) of the blocking lever (10) engages in the blocking and/or release position.

5. Coupling hook according to Claim 4, **characterized in that** the latching recess (17, 18) for the blocking position is shaped in such a manner that the cam (9) can emerge from the latching recess (17, 18) by adjustment of the safety catch (6) in the direction of the receptacle (4).

6. Coupling hook according to Claim 3, **characterized in that** the slotted guide (16) or guide surface (8) has at least one stop surface which is oriented approximately transversely with respect to the direction of movement of the safety catch (6) between the blocking and release position, the cam (9) bearing against the stop surface in the blocking and/or release position.

7. Coupling hook according to Claim 6, **characterized in that** the stop surface for the blocking position is shaped in such a manner that the cam (9) is disengaged from the stop surface by adjustment of the safety catch (6) in the direction of the receptacle (4).

8. Coupling hook according to at least one of Claims 1 to 7, **characterized in that** the blocking lever (10) is acted upon by at least one lifting cylinder (19"), Bowden cable (19') or cable (19), by means of which the blocking lever (10) can be transferred into the release position.

9. Coupling hook according to at least one of Claims 1 to 8, **characterized in that** at least one roller (15) detecting the coupling body (2) and rotatable about an axis is provided on the safety catch (6), said roller preventing transmission of torques of the coupling body (2) to the safety catch (6).

10. Coupling hook according to Claim 9, **characterized in that** the at least one roller (15) is in engagement with the coupling body (2) only after a pivoting movement of the safety catch (6) upwards.

11. Coupling hook according to at least one of Claims 1 to 10, **characterized in that** the safety catch (6) is monitored by at least one sensor (20) which can at least recognize whether the safety catch (6) is in the blocking position thereof.

## Revendications

1. Crochet d'accouplement destiné à un bras inférieur d'un tracteur agricole, le crochet d'accouplement (1) comprenant un corps de crochet (3) muni d'au moins un logement (4) destiné à un corps d'accouplement (2) et au moins une chambre de réception (5) dans laquelle est maintenu au moins un verrou de blocage (6) qui peut pivoter entre une position de blocage, s'engageant pardessus le corps d'accouplement (2) et verrouillant celui-ci, et une position de libération rétractée jusque dans la chambre de réception (5) de manière à ce que le corps d'accouplement (2) puisse être retiré du logement (4), le corps d'accouplement (2) pouvant déplacer le verrou de blocage (6) jusque dans une position d'activation lors de l'insertion dans le logement (4) de sorte que le verrou de blocage (6) soit ensuite transféré automatiquement jusque dans la position bloquée, le verrou de blocage (6) étant relié fonctionnellement à au moins une came (9) d'au moins un levier de blocage déplaçable (10), laquelle came bloque le verrou de blocage (6) dans sa position de verrouillage de sorte que celui-ci s'oppose à une force agissant sur le verrou de blocage (6) depuis le corps d'accouplement (2) accouplé et puisse être transféré dans la position de libération d'une part par une force orientée vers le logement (4) et d'autre part par déplacement du levier de blocage (10), **caractérisé en ce que** le verrou de blocage (6) peut être coulissé de manière limitée en direction du logement (4), le verrou de blocage (6) dans la position d'activation déplacée vers le logement (4) pouvant être poussé jusque dans la position de libération.

2. Crochet d'accouplement selon la revendication 1, **caractérisé en ce que** le levier de blocage (10) et/ou le verrou de blocage (6) est précontraint élastiquement en direction de la position de blocage.

3. Crochet d'accouplement selon la revendication 1 ou 2, **caractérisé en ce que** le verrou de blocage (6) comporte au moins une coulisse (16) ou au moins une surface de guidage (8) sur laquelle s'engage la came (9) du levier de blocage (10).

4. Crochet d'accouplement selon la revendication 3, **caractérisé en ce qu'**il est dans la coulisse (16) ou la surface de guidage (8) au moins un évidement d'encliquetage (17, 18) dans lequel s'engage la came (9) du levier de blocage (10) dans la position de blocage et/ou de libération.

5. Crochet d'accouplement selon la revendication 4, **caractérisé en ce que** l'évidement d'encliquetage (17, 18) est conformé pour la position de blocage de manière à ce que la came (9) puisse sortir de l'évidement d'encliquetage (17, 18) par déplacement du verrou de blocage (6) en direction du logement (4).

6. Crochet d'accouplement selon la revendication 3, **caractérisé en ce que** la coulisse (16) ou la surface de guidage (8) comporte au moins une surface de butée qui est orientée à peu près transversalement à la direction de déplacement du verrou de blocage (6) entre la position de blocage et la position de libération, la came (9) venant en appui sur la surface de butée dans la position de blocage et/ou de libération.

7. Crochet d'accouplement selon la revendication 6, **caractérisé en ce que** la surface d'arrêt pour la position de blocage est conformée de sorte que la came (9) par réglage du boulon de verrouillage (6) dans la direction de réception (4) se dégage de la surface d'arrêt.

8. Crochet d'accouplement selon l'une au moins des revendications 1 à 7, **caractérisé en ce qu'**au moins un vérin de levage (19"), un câble Bowden (19') ou un câble (19), permettant de transférer le levier de blocage (10) dans la position de libération, s'engage au niveau du levier de blocage (10).

9. Crochet d'accouplement selon l'une au moins des revendications 1 à 8, **caractérisé en ce qu'**il est prévu sur le verrou d'accouplement (6) au moins un galet (15), rotatif sur un axe, qui intercepte le corps d'accouplement (2) et empêche la transmission de couples du corps d'accouplement (2) au verrou de blocage (6).

10. Crochet d'accouplement selon la revendication 9, **caractérisé en ce que** l'au moins un galet (15) vient en engagement avec le corps d'accouplement (2) seulement après un pivotement du verrou de blocage (6) vers le haut.

11. Crochet d'accouplement selon l'une au moins des revendications 1 à 10, **caractérisé en ce que** le verrou de blocage (6) est surveillé par au moins un capteur (20) qui peut au moins détecter si le verrou de blocage (6) se trouve dans sa position de blocage.
